# EUROPÄISCHE PATENTSCHRIFT

(11) **EP 3 043 982 B1**
(45) Veröffentlichungstag und Bekanntmachung des Hinweises auf die Patenterteilung: **01.08.2018**
(21) Anmeldenummer: 14766423.9
(22) Anmeldetag: 09.09.2014
(51) Int. Cl.: B29C 69/02, B30B 9/32, B65D 1/02

(54) **VORRICHTUNG UND VERFAHREN ZUM KOMPRIMIEREN VON KUNSTSTOFFBEHÄLTNISSEN UNTER VERHINDERUNG VON WEISSBRUCH**
APPARATUS AND METHOD FOR COMPRESSING PLASTIC CONTAINERS WHILE AVOIDING STRESS WHITENING
DISPOSITIF ET PROCÉDÉ PERMETTANT DE COMPRIMER DES CONTENANTS EN MATIÈRE PLASTIQUE SANS FORMATION D'UNE RUPTURE BLANCHE

(30) Priorität: 09.09.2013 DE 102013109842
(43) Veröffentlichungstag der Anmeldung: 20.07.2016
(73) Patentinhaber: Krones AG, 93073 Neutraubling (DE)
(72) Erfinder: KRÜGER, Jochen, 93073 Neutraubling (DE)
(74) Vertreter: Bittner, Bernhard
(86) Internationale Anmeldenummer: PCT/EP2014/069164
(87) Internationale Veröffentlichungsnummer: WO 2015/032965

(56) Entgegenhaltungen:
- WO-A1-2013/124485
- JP-A- 2001 063 717
- US-A- 3 819 789
- US-A- 5 292 242

## Beschreibung

Die vorliegende Erfindung bezieht sich auf eine Vorrichtung und ein Verfahren zum Komprimieren von Kunststoffbehältnissen. In der Getränke herstellenden Industrie sind solche Vorrichtungen und Verfahren bekannt. Diese werden üblicherweise dazu eingesetzt, um befüllte Behältnisse zu komprimieren und auf diese Weise Flüssigkeit aus diesen Behältnissen zu pressen. Die Anmelderin ist jedoch in jüngerer Zeit zu einem anderen Verfahren übergegangen. Insbesondere bei der Herstellung von Großbehältern tritt das Problem auf, dass während des Transportes sehr hohe Volumina bzw. Gewichte transportiert werden müssen. Daher hat die Anmelderin in einer derzeit noch unveröffentlichten Patentanmeldung das Konzept vorgeschlagen, zunächst Kunststoffbehältnisse herzustellen, beispielsweise durch einen Blasformvorgang, diese anschließend in einem leeren Zustand zu komprimieren, die komprimierten Behältnisse zu palettieren und diese Paletten zu einem Abfüller zu transportieren. Dieser kann dann die Behältnisse expandieren und mit Flüssigkeit befüllen, wobei auch der Füllvorgang selbst das Behältnis wieder expandieren kann.

Dieses Komprimieren der leeren Behältnisse hat sich als durchführbare Möglichkeit, insbesondere bei Kunststoffbehältnissen, erwiesen. Dabei wird bei einem aus dem internen Stand der Technik der Anmelderin bekannten Verfahren ein Mündungsbereich des Behältnisses in einen Bodenbereich des Behältnisses durch den Komprimierungsvorgang eingerollt. Dies bedeutet, dass das Behältnis nicht willkürlich und unkontrolliert komprimiert wird, sondern gewissermaßen ein Teil des Behältnisses eingerollt wird. Hierbei entsteht eine umlaufende Faltkante, die während des Komprimierungsvorgangs ebenfalls eingerollt wird.

Allerdings hat sich bei dem Verfahren als problematisch herausgestellt, dass es teilweise zu Weißbruchstellen oder dergleichen kommt. Diese Stellen führen zu Unstabilitäten des komprimierten Behältnisses. Weiterhin müssen auch nach dem Komprimieren die Behältnisse wieder entspannt werden, das heißt der Druck in dem Behälter muss auf den Atmosphärendruck gesenkt werden. Die bei diesem Einrollen gebildete Falte zieht sich dabei zusammen und kann nach dem Entlüften Falten bekommen. Durch das Zusammenziehen spannt sich die Falte auch stark an einem jeweiligen Stempel an, sodass sich der eingerollte Behälter nur schwer von dem Stempel lösen lässt.

Die WO 2013/124485 A zeigt eine Vorrichtung nach dem Oberbegriff von Anspruch 1 und ein Verfahren nach dem Oberbegriff von Anspruch 11 zum Entnehmen von Flüssigkeiten aus verformbaren Behältnissen. Die Vorrichtung weist dabei eine erste und eine zweite Halteeinrichtung auf. Dabei hält die erste Halteeinrichtung einen ersten und die zweite Halteeinrichtung einen zweiten Abschnitt des Behältnisses, wobei die Abschnitte voneinander beabstandet sind. Durch eine Relativbewegung der beiden Halteeinrichtungen kann das dazwischen angeordnete Behältnis deformiert werden. Bei der Deformation des Behältnisses wird das Innenvolumen verkleinert. Weiterhin ist eine Entnahmeeinrichtung vorgesehen, welche eine Strömungsverbindung zu dem Innenraum des Behältnisses aufweist und über welche in dem Behältnis befindliche Flüssigkeit in Folge einer Kompression des Behältnisses entnehmbar ist. Die Vorrichtung weist weiter eine Steuerungseinrichtung auf, welche die Relativbewegung der einen Halteeinrichtung gegenüber der anderen Halteeinrichtung oder die Entnahme der Flüssigkeit über die Entnahmeeinrichtung in Abhängigkeit von einem Innendruck innerhalb des Behältnisses steuert.

Die US 5 292 242 A offenbart eine Vorrichtung zum Zusammenfalten eines aufrechten Behälters zu einer kompakten, stapelbaren Ausgestaltung, wobei der Behälter eine Bodenwand, Seitenwände mit zumindest oberen, unteren und mittleren ringförmig abgestuften Anteilen und eine obere Wand aufweist, welche eine Ausgussöffnung umfasst. Weiterhin weist die Vorrichtung Mittel zum Unterstützen und Halten des Behälters auf, wobei zwei gegenüberliegende Elemente angeordnet sind, welche zueinander beweglich ausgestaltet sind. Eines der Elemente ist dazu ausgestaltet, den Bodenbereich des Behälters zu stützen. Zudem kann ein Förderer oder Transportmittel vorgesehen sein, welche eine Vielzahl an Behältern der Faltvorrichtung zuführt.

Der vorliegenden Erfindung liegt daher die Aufgabe zugrunde, einerseits die Abnahme der komprimierten Behältnisse von dem Stempel bzw. der Halteeinrichtung zu erleichtern und andererseits auch die Gefahr des Entstehens von Weißbrüchen zu verringern und bevorzugt auch die Stapelbarkeit der Behältnisse zu verbessern.

Diese Aufgaben werden erfindungsgemäß durch die Gegenstände der unabhängigen Ansprüche erreicht. Vorteilhafte Ausführungsformen und Weiterbildungen sind Gegenstand der Unteransprüche.

Eine erfindungsgemäße Vorrichtung zum Komprimieren von Kunststoffbehältnissen wird in Anspruch 1 definiert. Sie weist eine erste Halteeinrichtung auf, die geeignet ist, einen ersten Bereich eines zu entleerenden Behältnisses zu halten. Weiterhin weist die Vorrichtung eine zweite Halteeinrichtung auf, welche geeignet ist, einen zweiten Bereich des zu entleerenden Behältnisses zu halten und/oder zu stützen, wobei der zweite Bereich von dem ersten Bereich beabstandet ist. Weiterhin weist die Vorrichtung eine Bewegungseinrichtung auf, welche geeignet ist, die erste Halteeinrichtung auf die zweite Halteeinrichtung zuzubewegen, um das zwischen der ersten Halteeinrichtung und der zweiten Halteeinrichtung befindliche Behältnis zu komprimieren. Dabei weist die erste Halteeinrichtung einen Querschnitt auf, der geringer ist, als ein Querschnitt des zu komprimierenden Behältnisses, sodass die erste Halteeinrichtung mit dem von der ersten Halteeinrichtung gehaltenen ersten Bereich des Behältnisses in einen weiteren Abschnitt des Behältnisses unter Bildung einer bezüglich einer Längsrichtung des Behältnisses umlaufenden Faltstelle einführbar ist.

Erfindungsgemäß ist an der ersten Halteeinrichtung ein Anschlagelement vorgesehen, welches die Faltstelle in einer vorgegebenen Relativposition der ersten Halteeinrichtung bezüglich der zweiten Halteeinrichtung kontaktiert und die Vorrichtung weist eine Druckerzeugungseinrichtung auf, welche einen Innenraum des zu komprimierenden Behältnisses wenigstens zeitweise während dessen Komprimierung mit einem Innendruck beaufschlagt, der über den um das Behältnis bestehenden Außendruck liegt. Vorteilhaft handelt es sich bei der Faltstelle um eine Einrollfalte. Im Folgenden wird daher anstelle des Begriffes Faltstelle auch der Begriff Einrollfalte verwendet.

Bevorzugt ist die erste Halteeinrichtung als Stempelelement ausgebildet, welches während des Komprimierungsvorganges vorteilhaft flächig an einem Wandungsbereich des zu komprimierenden Behältnisses anliegt. Durch dieses flächige Anliegen wird das Entstehen von Knicken und Falten währendes des Komprimierungsvorganges verhindert. Vorteilhaft soll während des Komprimierungsvorgangs nur eine derartige Faltstelle entstehen. So kann sich ein Mündungsbereich des Behältnisses flächig an die erste Halteeinrichtung anlegen und diese kann diesen gesamten Mündungsbereich des Behältnisses in den Bodenbereich des Behältnisses verlagern.

Vorteilhaft weist die erste Halteeinrichtung einen kreisförmigen Querschnitt auf. Daneben weist die erste Halteeinrichtung vorteilhaft auch einen Aufnahmeraum zum Aufnehmen der eigentlichen Mündung des Behältnisses auf. Bei der Mündung handelt es sich bevorzugt um einen Bereich des Behältnisses, der bei einem ggfs. vorangegangenen Blasformvorgang nicht verstreckt wurde. Diese Mündung kann dabei auch ein Gewinde zum Anbringen eines Verschlusses aufweisen, insbesondere ein Außengewinde.

Während des Komprimierens kann der sich an die Mündung anschließende Bereich des Behältnisses geschwenkt werden und sich an eine Außenoberfläche der ersten Halteeinrichtung anlegen. Erfindungsgemäss ist eine Außenkontur der ersten Halteeinrichtung an eine sich bei dieser Komprimierung des Behältnisses ergebende Kontur des Behältnisses angepasst, um, wie erwähnt, die Entstehung von Knicken und Brüchen zu vermeiden.

Dabei ist es möglich dass eine Krümmung an einer Außenoberfläche an eine Krümmung des Mündungsbereichs des Behältnisses angepasst ist.

Es werden hier zwei Vorgehensweisen vorgeschlagen, welche sich jedoch beide auf die Entstehung bzw. Verarbeitung der genannten Faltstelle beziehen. Beide Möglichkeiten führen dazu, dass bei der Faltstelle Knicke und Risse verhindert werden und dass auch ein Entnehmen des Behältnisses von der ersten Halteeinrichtung leichter ermöglicht wird. Vorteilhaft handelt es sich, wie oben erwähnt, bei dem zu komprimierenden Behältnis um ein leeres Behältnis.

Wie oben erwähnt, rollt sich beim Komprimieren des Behältnisses die Faltstelle bezüglich der Halteeinrichtung (welche auch als Stempel bezeichnet werden kann) entlang nach oben. In einer vorgegebenen Position der ersten Halteeinrichtung und insbesondere der tiefsten Position der Halteeinrichtung bzw. des Stempels, das heißt, wenn sich bevorzugt die Mündung des Behältnisses bereits an dem Boden des Behältnisses befindet, wird die Faltstelle bevorzugt gegen das Anschlagelement bzw. einen oberen Anschlag gedrückt und dabei bevorzugt durch einen Radius an der Halteeinrichtung etwas nach außen gedrückt.

Vorteilhaft ist daher die Halteeinrichtung so beschaffen, bzw. weist eine solche Gestalt auf, dass sie bei einem Komprimieren des Behältnisses ein Ausstellen bzw. nach außen Drängen der Faltstelle bezogen auf eine radiale Richtung des Behältnisses und bevorzugt auch bezogen auf eine Richtung senkrecht zu einer Längsrichtung des Behältnisses bewirkt.

Durch dieses gleichsam Wegdrücken der Falte wird eine Abnahme des Behältnisses von der Halteeinrichtung erleichtert. Bevorzugt wird die Falte auch so ausgeformt, dass sich die Behältnisse insgesamt leichter stapeln lassen.

In einer bevorzugten Ausführungsform ist das Anschlagelement umlaufend bezüglich einer Längsrichtung der Halteeinrichtung und bevorzugt auch bezüglich der Längsrichtung des zu komprimierenden Behältnisses ausgebildet. Auf diese Weise ist eine Behandlung der Faltstelle entlang seiner vollständigen Umfangsrichtung möglich. So kann das Anschlagelement als ein zumindest teilweise und bevorzugt vollständig um die Halteeinrichtung sich erstreckender Vorsprung ausgebildet sein, wobei sich dieser Vorsprung zumindest auch in einer radialen Richtung der ersten Halteeinrichtung erstreckt und wobei diese radialen Richtung zu der Zustellrichtung, in der die erste Halteeinrichtung auf die zweite Halteeinrichtung zugestellt wird, senkrecht steht.

Bei einer weiteren vorteilhaften Ausführungsform weist die erste Halteeinrichtung einen Übergangsabschnitt auf, in dem sich ein Querschnitt der ersten Halteeinrichtung kontinuierlich erweitert. Vorteilhaft ist dieser Übergangsabschnitt derart vorgesehen, dass er sich in einer Richtung weg von dem zu komprimierenden Behältnis in dessen Längsrichtung erweitert. Dieser Übergangsabschnitt ist bevorzugt derart gestaltet, dass er das besagte Aufweiten der Faltstelle bewirkt. Bevorzugt ist diese Erweiterung stetig. Bevorzugt weist der Übergangsabschnitt in seinem Querschnitt auch einen gekrümmten Verlauf auf. Bevorzugt schließt sich an diesen Übergangsabschnitt in Richtung des Behältnisses ein Abschnitt mit einem konstanten Querschnitt an.

Vorteilhaft erweitert sich ein Querschnitt der ersten Halteeinrichtung in dem besagten Übergangsabschnitt um höchstens 20%, bevorzugt um höchstens 10%, bevorzugt um höchstens 5% (bezogen auf den sich an diesen Übergangsabschnitt anschließenden Abschnitt mit dem konstanten Querschnitt). Vorteilhaft erweitert sich ein Querschnitt der ersten Halteeinrichtung in dem besagten Übergangsabschnitt um mindestens 0,5% bevorzugt um mindestens 1%, bevorzugt um mindestens 3%, bevorzugt um mindestens 5% (bezogen auf den sich an diesen Übergangsabschnitt anschließenden Abschnitt mit dem konstanten Querschnitt).

Bei der Längsrichtung des Behältnisses handelt es sich bevorzugt auch um eine Symmetrieachse des Behältnisses, welche besonders bevorzugt von der Mündung des Behältnisses zu dessen Boden führt. Vorteilhaft entspricht die Längsrichtung des zu komprimierenden Behältnisses auch der Zustellrichtung, in der die erste Halteeinrichtung auf die zweite Halteeinrichtung zugestellt wird. Bevorzugt wird das Behältnis in einem aufrecht stehenden Zustand komprimiert.

Bei einer weiteren vorteilhaften Ausführungsform kann sich das Anschlagelement an diesen Übergangsabschnitt anschließen oder selbst durch diesen Übergangsabschnitt gebildet werden.

Bei einer weiteren vorteilhaften Ausführungsform ist das Anschlagelement über einen Übergangsabschnitt an der ersten Halteeinrichtung angeordnet und dieser Übergangsabschnitt ist ein gekrümmter Abschnitt und insbesondere ein über die Umfangsrichtung radial nach außen gekrümmter Abschnitt bzw. ein Abschnitt, der sich, wie oben erwähnt, radial nach außen erweitert. Erfindungsgemäss weist die Halteeinrichtung eine Temperiereinrichtung zum Temperieren wenigstens eines Abschnitts der ersten Halteeinrichtung auf. Insbesondere wird damit ein Bereich des oben erwähnten Anschlages erwärmt. Damit die Faltstelle auch nach dem Entlasten bzw. Entlüften des komprimierten Behältnisses in dieser nach außen orientierten Position verbleibt, wird hier vorgeschlagen, dass die Halteeinrichtung insbesondere im Bereich des besagten Anschlagelements temperiert wird. Dies Anmelderin konnte feststellen, dass eine Temperierung in einem Bereich zwischen 40°C und 80°C , ausreichend ist.

Bei einer weiteren vorteilhaften Ausführungsform dient diese Temperiereinrichtung zum Temperieren wenigstens eines Abschnitts des Anschlagelements, um auf diese Weise auch eine Oberfläche der Halteeinrichtung, die mit der Faltstelle in Kontakt tritt, zu erwärmen.

Bei einer weiteren vorteilhaften Ausführungsform weist die Druckerzeugungseinrichtung ein Verschließelement auf, welches eine Mündung des zu komprimierenden Behältnisses wenigstens teilweise verschließt, um so einen kontrollierten und/oder reduzierten Austritt von Luft aus dem Behältnis während dessen Komprimierung zu ermöglichen. So kann beispielsweise ein Drosselelement vorgesehen sein, welches einen Austritt von Luft während der Komprimierung nur begrenzt ermöglicht, sodass ein bestimmter Innendruck in dem Behältnis aufrechterhalten wird.

Vorteilhaft ist in dem Verschließelement ein Ventilelement angeordnet. Dabei kann es sich beispielsweise um ein Ventil handeln, welches ab einem bestimmten Überdruck automatisch öffnet, um so das Entstehen zu hoher Drücke innerhalb des Behältnisses während dessen Kompression zu verhindern. Diese Beaufschlagung mit einem Überdruck ist auf den ersten Blick schwer verständlich, da dieser höhere Druck auch die zum Komprimieren nötige Kraft erhöht. Die Anmelderin hat jedoch herausgefunden, dass diese Druckbeaufschlagung sich auch auf die Faltstelle auswirkt bzw. diese gegenüber Knicken stabilisiert und überdies ein leichteres Entfernen des Behältnisses von der Halteeinrichtung erreicht wird. Vorzugsweise ragt die erste Halteeinrichtung in wenigstens einem Kompressionszustand in das Behältnis hinein. Vorzugsweise weist die Halteeinrichtung (bzw. ein Bereich derselben) auch wenigstens einen Abschnitt auf, der wenigstens zeitweise in einen umgestülpten Abschnitt des zu komprimierenden Behältnisses hineinragt. Vorteilhaft ist die Halteeinrichtung in wenigstens einem Komprimierungszustand von zwei übereinanderliegenden Wandungsabschnitten des Behältnisses vollständig in ihrer Umfangsrichtung umgeben.

Bei einer weiteren vorteilhaften Ausführungsform weist die Vorrichtung eine Abstreifeinrichtung und/oder Entfernungseinrichtung auf, um ein komprimiertes Behältnis von der ersten Halteeinrichtung abzustreifen. Dabei kann es sich um eine Abstreifeinrichtung handeln, welche beispielsweise in die erste Halteeinrichtung integriert ist und welche das Behältnis über seine Mündung aus der Halteeinrichtung herausdrückt. Es wäre jedoch auch möglich, dass eine Abstreifeinrichtung außerhalb der ersten Halteeinrichtung vorgesehen ist, und welche das Behältnis an seiner Faltstelle kontaktiert und so abstreift. Auch kann das Anschlagelement gleichzeitig auch als Abstreifelement dienen.

Dabei kann die Entfernungseinrichtung als verschiebbarer Körper und insbesondere als in der Zustellrichtung verschiebbarer Körper ausgebildet sein, der auf die Mündung bzw. den Mündungsrand des Behältnisses drückt, um dieses von der ersten Halteeinrichtung wegzudrücken.

Bei einer weiteren vorteilhaften Ausführungsform weist die Vorrichtung einen Träger auf, an dem mehrere Halteeinrichtungen angeordnet sind. Auf diese Weise ist es bevorzugt möglich, mehrere Behältnisse gleichzeitig zu komprimieren.

Bei einer weiteren vorteilhaften Ausführungsform weist die Vorrichtung eine Transporteinrichtung auf, welche den ersten Halteeinrichtungen die Kunststoffbehältnisse zuführt. Dabei kann diese Transporteinrichtung die Behältnisse in einer Transportrichtung transportieren, die bevorzugt senkrecht zu einer Bewegungsrichtung der ersten Halteeinrichtung bezüglich der zweiten Halteeinrichtung steht.

Die vorliegende Erfindung ist weiterhin auf ein Verfahren zum Komprimieren von Behältnissen laut Anspruch 11 gerichtet. Bei dem in Anspruch 11 definierten Verfahren werden zunächst Kunststoffbehältnisse bereitgestellt und anschließend diese Kunststoffbehältnisse komprimiert. Dabei hält eine erste Halteeirichtung einen ersten Bereich eines zu komprimierenden Behältnisses und eine zweite Halteeinrichtung hält einen zweiten Bereich des zu komprimierenden Behältnisses, wobei der zweite Bereich von dem ersten Bereich beabstandet ist. Weiterhin bewegt eine Bewegungseinrichtung die erste Halteeinrichtung auf die zweite Halteeinrichtung in einer Zustellrichtung zu, um das zwischen der ersten Halteeinrichtung und der zweiten Halteeinrichtung befindliche Behältnis zu komprimieren. Weiterhin wird die erste Halteeinrichtung mit dem von der ersten Halteeinrichtung gehaltenen ersten Bereich des Behältnisses in einen weiteren Abschnitt des Behältnisses unter Bildung einer bezüglich einer Längsrichtung des Behältnisses umlaufenden Faltstelle eingeführt.

Erfindungsgemäß wird wenigstens zeitweise während des Komprimierens mit einem an der ersten Halteeinrichtung vorgesehenen Anschlagelement die Faltstelle in einer vorgegebenen Relativposition der ersten Halteeinrichtung bezüglich der zweiten Halteeinrichtung kontaktiert und eine Druckerzeugungseinrichtung beaufschlagt einen Innenraum des zu komprimierenden Behältnisses wenigstens zeitweise während dessen Komprimierung mit einem Innendruck, der über dem um das Behältnis bestehenden Ausdruck liegt, wobei die erste Halteeinrichtung eine Temperiereinrichtung zum Temperieren wenigstens eines Abschnitts der ersten Halteeinrichtung aufweist. Vorteilhaft handelt es sich hierbei um einen Überdruck von wenigstens 0,5 bar. Diese beiden Vorgehensweisen dienen, wie oben erwähnt dazu, um Weißbruch in dem Material zu verhindern oder zu verringern. Es werden beide Maßnahmen kumulativ angewandt, das heißt es erfolgt sowohl die Druckbeaufschlagung als auch das Kontaktieren der Faltstelle mit dem Anschlagelement.

Bei einem weiteren vorteilhaften Verfahren wird das Behältnis mit einem vorgegebenen, über dem Umgebungsdruck liegenden Druck bereits vor dem Komprimieren vorgespannt. Vorteilhaft wird hierbei ein Druck vorgesehen, der bei wenigstens 0,5 bar oberhalb des Atmosphärendrucks liegt.

Weitere Vorteile und Ausführungsformen ergeben sich aus den beigefügten Zeichnungen. Darin zeigen:
- Fig. 1: Eine schematische Darstellung zur Veranschaulichung eines erfindungsgemäßen Verfahrens;
- Fig. 2: eine Vorrichtung zum Komprimieren von Behältnissen in einer ersten Ausführungsform;
- Fig. 3: eine Draufsicht auf eine erfindungsgemäße Vorrichtung;
- Fig. 4: eine Darstellung einer erfindungsgemäßen Vorrichtung in einem weiteren Verfahrensstadium;
- Fig. 5: eine Darstellung der erfindungsgemäßen Vorrichtung in einem weiteren Verfahrensstadium;
- Fig. 6: eine Darstellung der erfindungsgemäßen Vorrichtung in einem weiteren Verfahrensstadium;
- Fig. 7: eine Detaildarstellung zur Veranschaulichung einer Komprimierung eines Behältnisses;
- Fig. 8: eine weitere Darstellung der erfindungsgemäßen Vorrichtung in einem weiteren Verfahrensstadium;
- Fig. 9: eine Darstellung von Halteeinrichtungen mit Behältnissen;
- Fig. 10: eine weitere Darstellung eines erfindungsgemäßen Verfahrens;
- Fig. 11: eine Darstellung einer erfindungsgemäßen Vorrichtung mit einer weiteren vorteilhaften Anordnung der zweiten Halteeinrichtungen;
- Fig. 12: die Darstellung aus Fig. 11 bei geschlossenen Halteeinrichtungen;
- Fig. 13: eine weitere Darstellung zur Veranschaulichung der Komprimierung eines Behältnisses;
- Fig. 14: eine weitere Darstellung zur Veranschaulichung der Komprimierung eines Behältnisses;
- Fig. 15: eine aufgrund der fehlenden Temperierung nicht erfindungsgemässe Darstellung zur Veranschaulichung der Komprimierung eines Behältnisses; und
- Fig. 16: eine Darstellung einer erfindungsgemäßen Vorrichtung.

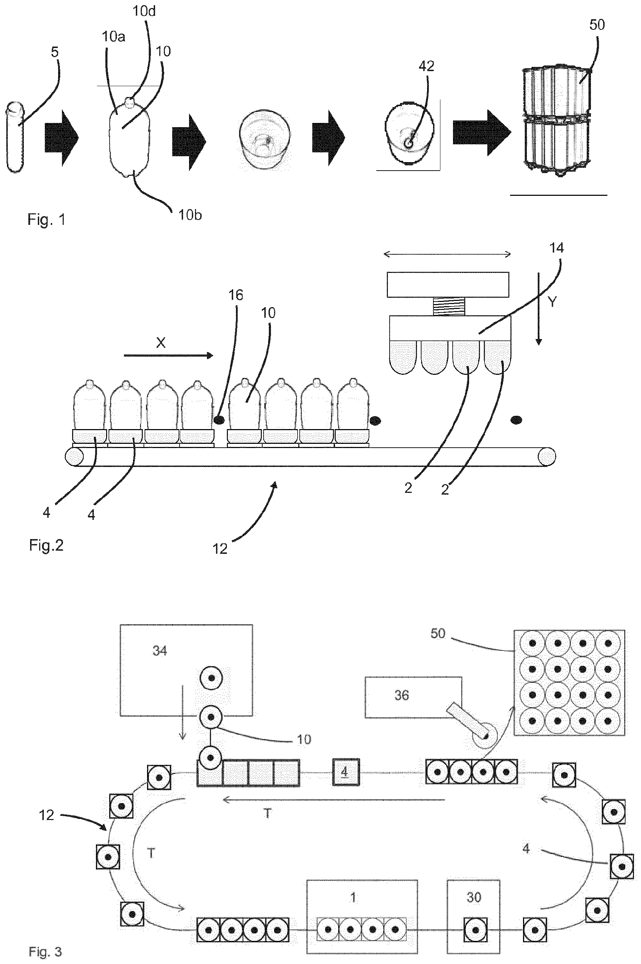

Fig. 1 zeigt eine Darstellung des Verfahrens zum Herstellen der komprimierten Behältnisse. Dabei wird zunächst von einem Kunststoffvorformling 5 ausgegangen, der mittels einer Umformungseinrichtung, wie beispielsweise einer Streckblasmaschine, zu dem Behältnis 10 umgeformt wird. In einem weiteren Verfahrensschritt wird dieses umgeformte Behältnis, insbesondere mit der erfindungsgemäßen Vorrichtung komprimiert, derart, dass ein Mündungsbereich des Kunststoffbehältnisses in einem Bodenbereich des Kunststoffbehältnisses eingeschoben wird. Das Bezugszeichen 10a kennzeichnet einen ersten Bereich des zu komprimierenden Behältnisses, bei dem es sich um einen Bereich handelt, der auch die Mündung des Behältnisses enthält. Das Bezugszeichen 10b kennzeichnet einen zweiten Bereich des zu komprimierenden Behältnisses, bei dem es sich hier um einen Bodenbereich handelt.

In einem weiteren Verfahrensschritt wird auf die Mündung eine Kappe oder ein Verschluss 42 aufgesetzt. Anschließend wird eine Vielzahl derartiger komprimierter Behältnisse zu einer Palette 50 zusammengestellt.

Fig. 2 zeigt eine Darstellung einer erfindungsgemäßen Vorrichtung zum Komprimieren der Behältnisse. Dabei sind hier vier erste Halteeinrichtungen 2 vorgesehen, die zum Komprimieren der Behältnisse mit dem Mündungsbereich der Behältnisse zusammenwirken und diesen in Richtung der zweiten Halteeinrichtungen 4 pressen bzw. komprimieren.

Bei der hier gezeigten Ausführungsform sind vier derartige erste Halteeinrichtungen 2 an einem gemeinsamen Träger 14 angeordnet und können so in der Zustellrichtung Y hier nach unten auf die Behältnisse 10 zugestellt werden.

Das Bezugszeichen 12 kennzeichnet in seiner Gesamtheit eine Transporteinrichtung, welche hier zum Transportieren der Behältnisse dient. Genauer gesagt führt diese Transporteinrichtung die unkomprimierten Behältnisse den ersten Halteeinrichtungen 2 zu und fördert danach auch bevorzugt die komprimierten Behältnisse von der Komprimierungseinrichtung abtransportiert. Das Bezugszeichen 16 bezieht sich auf eine Positionsbestimmungseinheit, wie etwa einer Lichtschranke, mit der die Position der Behältnisse entlang ihrer Transportrichtung X bestimmt werden kann. Dabei wäre es denkbar, dass die Transporteinrichtung selbst in Abhängigkeit von einem Signal dieser Positionierungseinheit gesteuert wird. Es wäre jedoch auch möglich dass die Bewegungen der einzelnen zweiten Halteeinrichtungen 4 unabhängig voneinander steuerbar sind und bevorzugt auch diese Steuerungen in Abhängigkeit von der Positionsbestimmungseinheit erfolgen.

Daneben können auch Sperrelemente vorgesehen sein, welche einen Weitertransport der zweiten Halteeinrichtungen 4 entlang der Transportrichtung x wenigstens zeitweise verhindern.

Bei der in Fig. 2 gezeigten Ausgangssituation (die folgende Beschreibung bezieht sich jedoch auch auf weitere Figuren) sind sämtliche ersten Halteeinrichtungen 2 bzw. alle Stempel in einer oberen Position. Im Verfahren wird vorteilhaft abgefragt, ob tatsächlich die Halteeinrichtungen in einer oberen Stellung sind. Weiterhin wird zu diesem Zeitpunkt bevorzugt ein (nicht gezeigter) Anschlag an den Halteeinrichtungen vorgeheizt, insbesondere auf eine Temperatur in einem Bereich zwischen 50°C und 80°C, bevorzugt zwischen 55°C und 75°C, bevorzugt zwischen 60°C und 65°C. Dabei wird bevorzugt mittels einer Steuerung diese Temperatur abgefragt und geregelt. Untenstehend wird genauer der Zweck dieser Temperierung erläutert.

Bei der in Fig. 2 gezeigten Ausführungsform stehen hier vier Behältnisse in einem einzelnen Träger auf einem Transportband. Steuerungsseitig kann hier wiederum eine Abfrage erfolgen, ob tatsächlich sämtliche hier vier Behältnisse vorhanden sind. Solange dies noch nicht der Fall ist, kann eine Behältnissperre geschlossen sein, sodass vermieden wird, dass weniger als eine vorbestimmte Anzahl an Behältnissen, hier weniger als vier Behältnisse, zu den ersten Halteeinrichtungen gelangen.

Fig. 3 zeigt eine weitere Darstellung einer erfindungsgemäßen Vorrichtung. Auch hier ist wiederum die Transporteinrichtung 12 vorgesehen, welche hier die einzelnen zweiten Halteeinrichtungen 4 entlang eines umlaufenden Transportpfades T transportiert. Dieser Transportpfad enthält hier geradlinige Abschnitte und gekrümmte Abschnitte. Der Transportpfad verläuft jedoch bevorzugt in einer Ebene. Wie in der Figur gezeigt, werden zunächst in einer Umformungseinrichtung 34 die Kunststoffbehältnisse 10 erzeugt und anschließend in die jeweiligen zweiten Halteeinrichtungen 4 eingesetzt.

Anschließend werden die einzelnen Halteeinrichtungen 4 zu Vierergruppen gruppiert und gelangen in die erfindungsgemäße Vorrichtung 1, in der die Komprimierung der Kunststoffbehältnisse erfolgt. Bei der in Fig. 3 gezeigten Ausgestaltung ist die Bewegung jeder einzelnen Halteeinrichtung 4 unabhängig von den Bewegungen weiterer Halteeinrichtungen 4. Auf diese Weise können wahlweise unterschiedliche Gruppen erstellt werden, aber auch die Gruppen an Halteeinrichtungen wieder aufgelöst werden.

In der Transportrichtung der Behältnisse stromabwärts bezüglich der Vorrichtung 1 befindet sich eine Inspektionseinrichtung 30 welche die einzelnen hergestellten Kunststoffbehältnisse untersucht. Dabei kann in diesem Bereich bereits eine Vereinzelung der einzelnen Halteeinrichtungen 4 erfolgen. Anschließend werden die Halteeinrichtungen 4 mit den darin befindlichen komprimierten Behältnissen 10 einer Palettiereinrichtung 36 zugeführt, welche Paletten 50 von komprimierten Kunststoffbehältnissen bildet. Zwischen der Vorrichtung 1 und der Palettiereinrichtung kann sich noch eine Veschließeinrichtung (nicht gezeigt) befinden, welche Verschlüsse auf den Mündungen der komprimierten Behältnisse 10 anbringt.

Bei dem hier bzw. in der obigen Einleitung dargestellten Verfahren werden vier Behälter in einem Träger bzw. Carrier hier mit einer maximalen Geschwindigkeit unter die ersten Halteeinrichtungen gefahren. Die Teilung ist dabei insbesondere durch die Größe der einzelnen Träger bzw. der zweiten Halteeinrichtungen 4 vorgegeben. Die Halteeinrichtungen 4 können selbst wiederum über Trägerelemente an der Transporteinrichtung 12 befestigt (bzw. beweglich angeordnet) sein. Bei einem weiteren Schritt wird abgefragt, ob tatsächlich die vier Behältnisse vorhanden sind.

Die Transporteinrichtung kann weiterhin Beschleunigung- und Verzögerungsbereiche aufweisen, welche die Transportbewegung der einzelnen Halteeinrichtungen beschleunigt oder verzögert. Alternativ kann die Transporteinrichtung jedoch auch ein Transportband sein, an dem die einzelnen Halteeinrichtungen angeordnet sind. Auch wäre die Verwendung von Transportketten oder drehbaren Transporteinrichtungen denkbar.

Die vier Stempel bzw. die ersten Halteeinrichtungen 2 fahren weiter bis kurz vor die Mündung der einzelnen Behältnisse. Auch kann wieder eine Abfragung der Position und Geschwindigkeit der einzelnen ersten Halteeinrichtungen vorgenommen werden. Vorteilhaft werden die ersten Halteeinrichtungen mit einer Geschwindigkeit auf die Kunststoffbehältnisse zugestellt, welche zwischen 100 mm/Sek. und 500 mm/Sek., bevorzugt zwischen 200 mm/Sek. und 400 mm/Sek. und besonders bevorzugt bei ca. 300 mm/Sek. liegt.

Die einzelnen Stempel bzw. Halteeinrichtungen 2 werden nun langsam nach unten bewegt und komprimieren so die Behältnisse. Dabei werden bevorzugt die Behältnisse zunächst zentriert. Vorteilhaft weisen dabei die einzelnen Halteeinrichtungen jeweils Zentrierelemente wie sogenannte Zentrierglocken auf. Vorteilhaft weisen die einzelnen ersten Halteeinrichtungen auch Abdichteinrichtungen bzw. Elemente auf, welche einen Luftfluss durch die Mündungen während des Komprimierens begrenzen.

Vorteilhaft wird wieder über eine Erfassungseinrichtung eine Position der ersten Halteeinrichtungen 2 in der Zustellrichtung Y abgefragt.

Weiterhin werden die Behältnisse mit einem vorgegebenen Druck vorgespannt, beispielsweise mit 0,5 bar über dem atmosphärischen Druck. Vorteilhaft sind auch Druckmesseinrichtungen vorgesehen, welche den Innendruck in den Behältnissen während des Komprimierungsvorgangs bestimmen. Auch können Steuerungseinrichtungen vorgesehen sein, welche den Innendruck in dem Behältnis regeln.

Nunmehr beschleunigen die Halteeinrichtungen nach unten und auf diese Weise werden die Behältnisse eingerollt. Dabei baut sich in den Behältnissen ein Innendruck auf. Dabei können wiederum bestimmte Parameter, wie eine Position der Halteeinrichtungen, eine Anpresskraft sowie auch die Geschwindigkeit überprüft werden. Vorteilhaft liegt eine Kompressionskraft in einem Bereich von 50kN bis 100kN, bevorzugt zwischen 60kN und 80kN und bevorzugt bei etwa 70 kN (berechnet hier für vier Halteeinrichtungen). Die Geschwindigkeit, mit der die Zustellung bzw. die Komprimierung der Kunststoffbehältnisse erfolgt, liegt bevorzugt zwischen 50 mm/Sek. und 200 mm/Sek., bevorzugt zwischen 70 mm/Sek. und 130 mm/Sek.. Vorteilhaft ist weiterhin eine Ventileinrichtung vorgesehen, welche ab einem bestimmten Überdruck im Inneren des Behältnisses öffnet, sodass der Maximaldruck im Inneren des Behältnisses nicht überschritten wird. Vorteilhaft liegt dieser Maximaldruck zwischen 2 bar und 3 bar und bevorzugt bei 2,5 bar. Bevorzugt kann hier eine mechanische und/ oder elektrische Regelung des Innendrucks in dem Behältnis erfolgen. Dabei kann beispielsweise eine definierte Düse oder Blende vorgesehen sein, jedoch auch ein Druckregelventil.

Während des Komprimierens ergibt sich eine umlaufende Einrollfalte des Behältnisses. Diese drückt bevorzugt bei der tiefsten Position der ersten Halteeinrichtung gegen einen Radius der ersten Halteeinrichtung und rollt sich dabei bevorzugt ein paar Millimeter nach außen. Bevorzugt wird auch wiederum die Endposition der Halteeinrichtungen abgefragt, was beispielsweise über einen Endschalter erfolgen kann oder auch über die Erfassung einer Position der Halteeinrichtungen.

Bevorzugt werden die ersten Halteeinrichtungen kurz in dieser Position gehalten, um, wie unten genauer beschrieben wird, die Einrollfalte an der besagten Nut zu temperieren.

Bei einem weiteren Verfahrensschritt fahren die Halteeinrichtungen, bevorzugt mit höherer Geschwindigkeit wieder nach oben. Dabei ist es denkbar, dass die Zentrierglocke oder ein weiteres Element den eingerollten Behälter nach unten abstößt. Die Geschwindigkeit dieser Rückstellbewegung liegt hier vorteilhaft wieder zwischen 200 mm/Sek. und 400 mm/Sek. und vorteilhaft bei ca. 300 mm/Sek.

Die nunmehr komprimierten bzw. eingerollten Behältnisse bleiben in der zweiten Halteeinrichtung bzw. der Bodentasse. In diesen Halteeinrichtungen werden die so eingerollten Behältnisse abtransportiert und gleichzeitig können weitere vier Behältnisse zu den ersten Halteeinrichtungen 2 transportiert werden. Auch hier kann auch wieder eine Abfrage erfolgen, ob die vier bereits komprimierten Behältnisse ausgefahren wurden. Zu diesem Zweck kann beispielsweise eine doppelte Lichtschranke vorgesehen sein.

Die eingerollten Behältnisse werden aus ihren Halteeinrichtungen entnommen, bevorzugt mit einer Staubkappe versehen und palettiert. Die leeren zweiten Halteeinrichtungen fahren wieder zur Blasformmaschine, um die nächsten Behältnisse aufzunehmen.

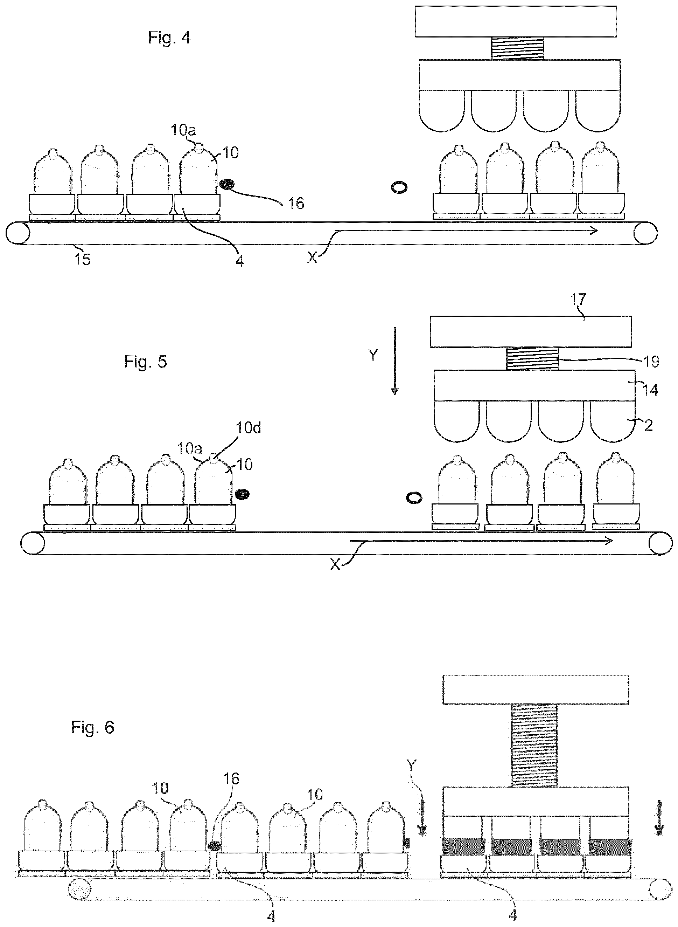

Fig. 4 zeigt eine weitere Darstellung einer erfindungsgemäßen Vorrichtung. Hier fahren die vier Behälter bzw. Behältnisse 10 mit einer maximalen Geschwindigkeit unter die Stempel bzw. die ersten Halteeinrichtungen. Zu diesem Zweck kann das Transportband 15 wieder eine Beschleunigungs- oder Verzögerungsrampe aufweisen. Man erkennt jedoch, dass in Fig. 4 die Position der einzelnen Behältnisse noch nicht exakt ausgerichtet ist. Zu diesem Zweck kann beispielsweise durch eine entsprechende Bewegung der Transporteinrichtung, aber auch durch eine individuelle Bewegung der einzelnen Halteeinrichtungen 4 eine exakte Positionierung vorgenommen werden. Die zweiten Halteeinrichtungen können aber auch so gebaut bzw. ausgeführt sein, dass sie aufgrund ihrer Größe schon die richtige Teilung der Behälter unter der Presse bzw. unter den ersten Halteeinrichtungen haben.

Bei der in Fig. 5 gezeigten Situation sind die Behältnisse 10, bzw. deren Mündungsbereiche 10a mit den Mündungen 10d genau unter den Halteeinrichtungen ausgerichtet. Das Bezugszeichen 17 kennzeichnet schematisch eine Antriebseinrichtung, welche die Zustellbewegung der ersten Halteeinrichtungen 2 bewirkt. Diese Antriebseinrichtung 17 kann dabei beispielsweise eine oder mehrere Antriebsspindeln 19 aufweisen. Daneben wäre es jedoch auch möglich, dass als Antrieb ein linearmotorischer oder ein pneumatischer oder ein hydraulischer Antrieb verwendet wird. Besonders bevorzugt wird ein hydraulischer Antrieb eingesetzt, der sich insbesondere durch seine kleine Baugröße und die Wartungsmöglichkeit auszeichnet.

Bei der in Fig. 6 gezeigten Situation wurden nunmehr die ersten Halteeinrichtungen 2 auf die zweiten Halteeinrichtungen 4 zugestellt und auf diese Weise die dazwischen liegenden Kunststoffbehältnisse komprimiert. Man erkennt, dass hier bereits zwei weitere Gruppen an Behältnissen bereit stehen können, welche nachfolgend zu komprimieren sind.

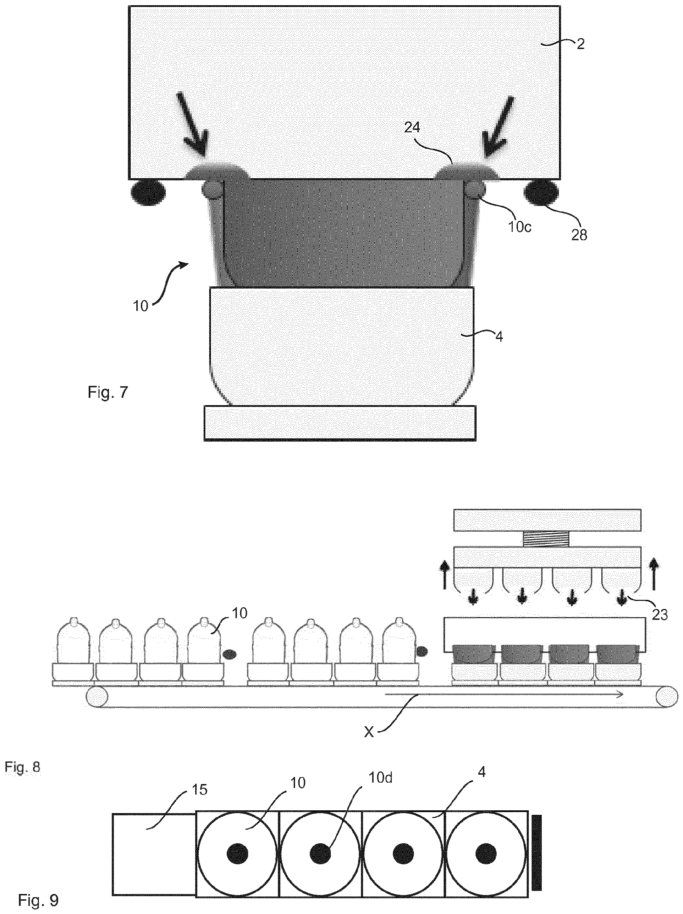

Fig. 7 zeigt eine detaillierte Darstellung eines Einrollprozesses. Dabei ist wieder die erste Halteeinrichtung 2 gezeigt, welche auf die zweite Halteeinrichtung 4 zugestellt wird. Die erste Halteeinrichtung weist dabei eine Umfangsnut 24 auf, welche beim Zusammendrücken des Behältnisses eine Einrollfalte 10c kontaktiert. Durch dieses Kontaktieren der Einrollfalte 10c kann der Einrollvorgang insgesamt verbessert werden und es kann insbesondere das Entstehen von Weißbrüchen in dem Behältnis verhindert werden. Vorteilhaft wird dieser umlaufende Anschlag, wie oben erwähnt, temperiert. Daneben weist die erste Halteeinrichtung bevorzugt auch eine Erweiterung auf, d.h. einen Abschnitt, in dem sich ein Querschnitt der Halteeinrichtung von unten nach oben erweitert. Dieser (in Fig. 7 nicht gezeigte) Abschnitt dient ebenfalls zum Einwirken auf die Einrollfalte 10c. Daneben können Positionserfassungsmittel 28 vorgesehen sein, welche eine Position der Einrollfalte 10c und oder eine Relativposition zwischen den Halteeinrichtungen 2, 4 erfassen.

Weiterhin wäre es auch möglich, die Druckluft, welche beim Komprimieren aus dem Behältnis herausgedrückt wird, wiederum zum Vorspannen der nachfolgenden Behältnisse zu nutzen und damit zu recyceln. Auch ist es denkbar, dass eine Abluft der vorgestellten Blasformmaschine genutzt werden kann, um die Behältnisse hier mit einem Druck zu beaufschlagen. Der Vorteil könnte darin bestehen, dass beispielsweise gereinigte Luft oder Sterilluft aus der Blasformmaschine auch zum Vorspannen genutzt werden kann. Auch kann die erzeugte Druckluft für pneumatische Antriebe verwendet werden.

Fig. 8 zeigt eine weitere Darstellung der erfindungsgemäßen Vorrichtung, wobei hier auch Zentrierelemente 23 angedeutet sind, welche beim Zustellen auf die Kunststoffbehältnisse 10 diese zentrieren. Dabei kann es sich beispielsweise um sog. Zentrierglocken handeln, welche einen Mündungsabschnitt der Behältnisse ausrichten.

Fig. 9 zeigt entsprechend eine Anordnung aus vier zweiten Halteeinrichtungen 4 mit darin angeordneten Kunststoffbehältnissen 10. Das Bezugszeichen 15 kennzeichnet ein Transportmittel wie ein Transportband oder einen Transportträger. Das Bezugszeichen 10d bezieht sich auf einen Mündungsabschnitt der Behältnisse 10.

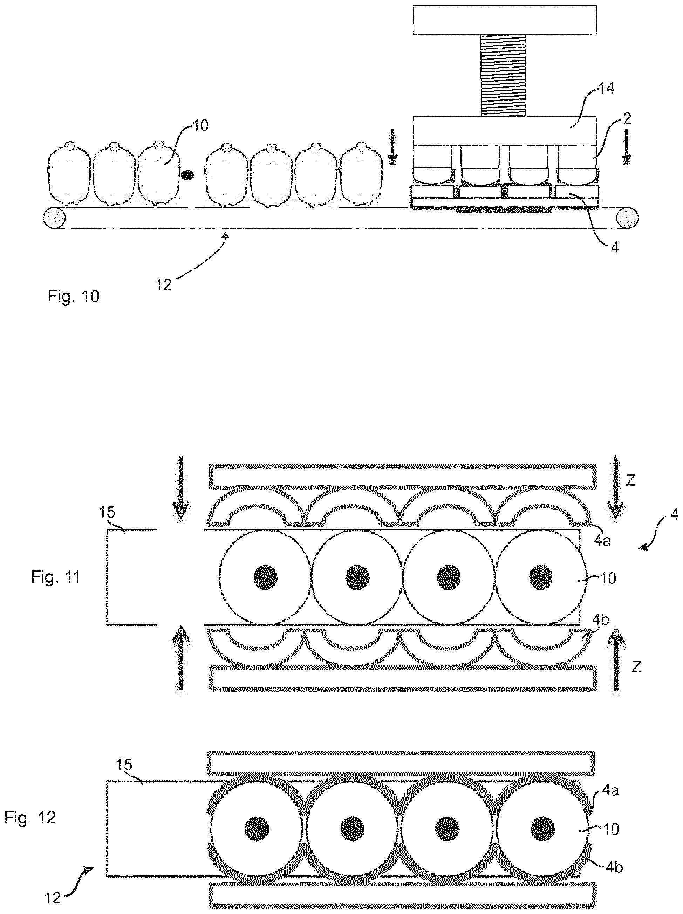

Bei der in Fig. 10 gezeigten Darstellung wurden, wie oben erwähnt, die Halteeinrichtungen 2 auf die Halteeinrichtungen 4 zugestellt und die Behältnisse sind damit vollständig komprimiert. Dabei ist es vorteilhaft, wenn beim Komprimieren keine scharfkantigen Faltungen mit sogenanntem Weißbruch entstehen, da die Behälter sonst nach dem Dekomprimieren und Befüllen unschöne Falten haben und an diesen Falten auch Schwachstellen entstehen, und damit die Behältnisse nicht mehr die geforderte Druckstabilität aufweisen und somit beispielsweise für karbonisierte Getränke unbrauchbar sind. Damit die Behältnisse allerdings gut komprimiert werden und durch die Stempel nicht nur einfach zusammengeknüllt werden, wird hier vorgeschlagen, dass die Behältnisse beispielsweise durch ein Ventil im Stempel, das auf der Mündung abdichtet, mit einem leichten Druck vorgespannt werden. Dann drückt die Halteeinrichtung 2 das Behältnis zusammen und durch die Volumenreduzierung steigt der Druck in dem Behältnis weiter an. Dabei wird darauf hingewiesen, dass der Innendruck in dem Behältnis auch nicht beliebig ansteigen darf, da sonst die Druckkraft extrem ansteigen würde und das Behältnis schließlich platzen könnte. Daher wird auch die Luft aus dem Behältnis ab einem bestimmten Druck geregelt abgelassen, um einen bestimmten Druck in dem Behältnis aufrecht zu erhalten. Wie oben erwähnt, hat die Anmelderin herausgefunden, dass der Einrollvorgang sich bei einem Druck im Bereich von 2 bis 2,9 bar und bevorzugt von ca. 2,2 bar (Überdruck) oder mehr schön einrollen lässt.

Für die Druckregelung kann ein elektronisches Druckregelventil eingesetzt werden, das ab einem vorgegebenen und erreichten Druck innerhalb des Behältnisses so weit öffnet, dass der Druck keinesfalls höher wird. Dies ist wiederum vorteilhaft, da die notwendige Kraft zum Komprimieren der Behältnisse direkt von dem Druck in dem Behältnis abhängt. Bei einem Innendruck von 2,5 bar beträgt die Kraft auf die Halteeinrichtungen, bzw. jede einzelne Halteeinrichtung bereits ca. 15,3 kN, was einer Gewichtskraft von ca. 1,53 t entspricht. Ist der Druck andererseits zu gering, so können sich an dem Behältnis unkontrollierte Falten mit Weißbruch bilden.

Es wäre weiterhin auch denkbar, den Druck aus dem Behältnis, beispielsweise über eine mechanische Drossel, wie eine Lochblende abzulassen. In diesem Falle wäre jedoch ein im Wesentlichen konstanter Volumenstrom erforderlich. Beispielsweise baut sich bei einem Volumenstrom von 4l/Sek. durch eine Blende mit 4,6 mm Durchmesser in dem Behältnis ein Staudruck im Bereich von 2,5 bar auf, was zum gleichen Ergebnis führen würde.

Die Vorteile der Erfindung bestehen darin, dass sich die komprimierten Behältnisse auf diese Weise gut stapeln lassen, daneben sich auch kostengünstig transportieren lassen und dabei ihre Eigenschaften behalten. Die wieder ausgerollten Behältnisse haben noch die gleichen Barriereeigenschaften und die gleiche Druckstabilität wie vor dem Einrollen, sofern keine scharfkantigen Falten in Weißbruch im PET-Material entstehen.

Die Figuren 10 bis 12 zeigen eine weitere Ausgestaltung der erfindungsgemäßen Vorrichtung. Auch hier werden die Behältnisse 10 über eine Transporteinrichtung 12 an die ersten Halteeinrichtungen 2 herangeführt. Während jedoch sich bei dem vorangegangenen Ausführungsformen die Behältnisse bereits in den zweiten Halteeinrichtungen 4 befunden haben, sind nunmehr diese zweiten Halteeinrichtungen in bzw. bezüglich der Transportrichtung der Behältnisse stationär unterhalb der ersten Transporteinrichtungen 2 angeordnet. In diesem Falle werden die Behältnisse ebenfalls in die vorgesehene Position zur Komprimierung gefahren und dann werden die zweiten Halteeinrichtungen 4 geschlossen.

Fig. 11 veranschaulicht diesen Vorgang. Man erkennt, dass die zweiten Halteeinrichtungen 4 hier zweiteilig aufgebaut sind und einen Teil 4a und einen Teil 4b aufweisen. Sobald sich die Behältnisse 10 in der richtigen Position befinden, werden diese Teile 4a, 4b in der Richtung Z aufeinander zugestellt, sodass sich der in Fig. 12 gezeigte Zustand ergibt. Anschließend werden die Behältnisse mit den in Fig. 11 und 12 von oben kommenden ersten Halteeinrichtungen 2 (nicht gezeigt) komprimiert.

Diese Ausführungsform weist einen Vorteil auf, dass die zweiten Halteeinrichtungen 4 gegenüber den ersten Halteeinrichtungen 2 in der Transportrichtung X der Behältnisse 10 stets richtig positioniert sind. Allerdings müssen hier die zweiten Halteeinrichtungen zweiteilig und bevorzugt halbschalenartig ausgebildet sein.

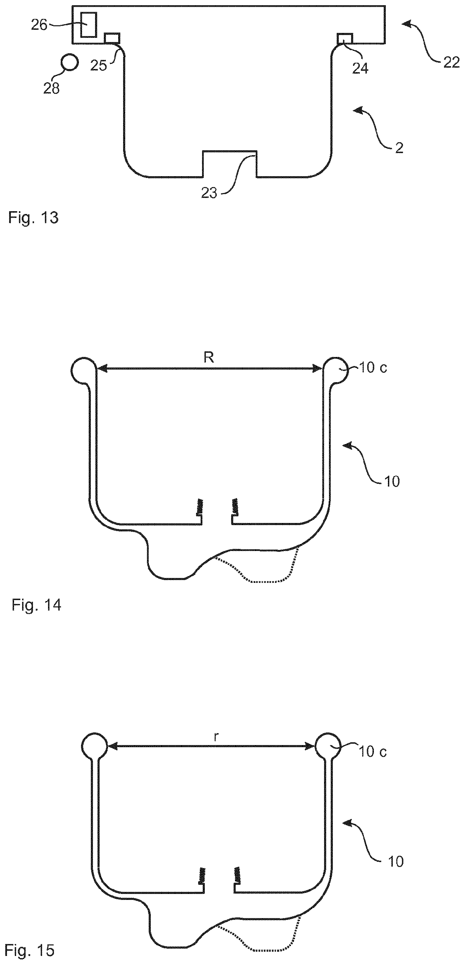

Fig. 13 veranschaulicht die Komprimierung des Behältnisses und insbesondere die Einwirkung auf die Einrollfalte 10c. Diese Einrollfalte 10c ist in Fig. 14 dargestellt. Man erkennt, dass die erste Halteeinrichtung 2 einen umlaufenden Vorsprung 22 aufweist. Dieser umlaufende Vorsprung bzw. Radius drückt beim Komprimieren des Behältnisses 10 gegen die Einrollfalte 10c und diese rollt sich ein paar Millimeter nach außen. Das Bezugszeichen 25 kennzeichnet einen Übergangsbereich der ersten Halteeinrichtung 2. In diesem Übergangsbereich 25 erweitert sich ein Querschnitt der ersten Halteeinrichtung 2 von unten nach oben. Dabei handelt es sich bevorzugt um eine stetige Erweiterung. Bevorzugt weist die Halteeinrichtung zumindest in dem Übergangsabschnitt einen kreisförmigen Querschnitt (senkrecht zur der Zustellrichtung) auf. Auch erkennt man, dass dieser Übergangsbereich gekrümmt ausgebildet ist. Das Bezugszeichen 24 kennzeichnet eine Erwärmungseinrichtung, welche den Anschlag bzw. auch den Übergangsbereich 25 erwärmt. Das Bezugszeichen 26 kennzeichnet grob schematisch eine Druckbeaufschlagungseinrichtung, welche durch Beaufschlagung mit Druckluft ein Ablösen des Behältnisses von der ersten Halteeinrichtung fördern kann

Mittels Positionsabfrageeinrichtungen 28 kann wiederum die Endposition abgefragt werden und es kann vorteilhaft auch die Position der Einrollfalte 10c überprüft werden. Das Bezugszeichen 23 kennzeichnet einen Zentrierabschnitt, der zum Zentrieren des Behältnisses dient, und der den Mündungsbereich des Behältnisses bzw. ein Gewinde des Behältnisses aufnehmen kann.

Fig. 14 zeigt eine Darstellung eines eingerollten Behältnisses. Dabei wurde hier eine Temperierung eingesetzt, das heißt mittels der Heizeinrichtung 24 wurde der Übergangsbereich 25 erwärmt. Man erkennt, dass die Einrollfalte 10c hier nach außen gedrückt ist und sich so der Radius R ergibt. Auf diese Weise ist es möglich, die komprimierten Behältnisse ineinander zu stapeln und auch wieder voneinander zu trennen.

Fig. 15 zeigt eine nicht erfindungsgemässe Darstellung, bei der keine Temperierung verwendet wurde. Man erkennt, dass hier der Radius r geringer ist, als der in Fig. 14 gezeigte Radius R, bzw. die Einrollfalte 10c weiter nach innen ragt. Diese Einrollfalten schnüren sich beim Stapeln eng um den nächsten Behälter und sie lassen sich schlechter wieder trennen

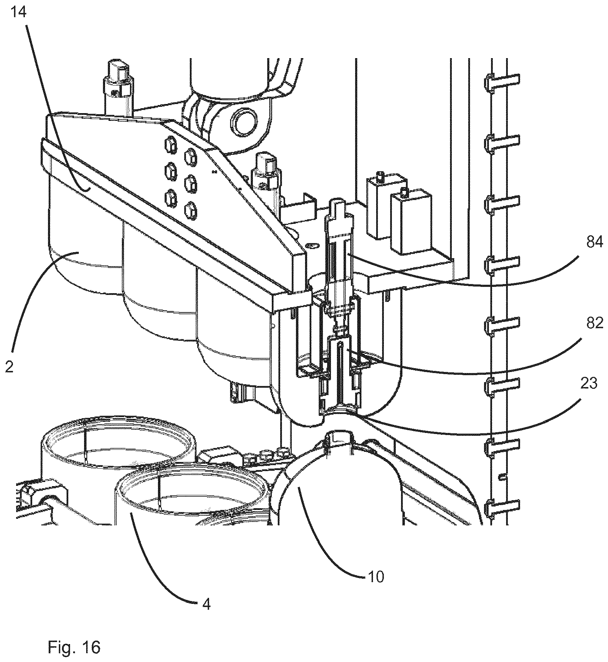

Fig. 16 schließlich zeigt eine Darstellung einer erfindungsgemäßen Vorrichtung. Hier sind wieder die zweiten Halteeinrichtungen 4 dargestellt, wobei es hier unwesentlich ist, ob diese mit der Transporteinrichtung mitbewegt werden oder sich bereits unterhalb der ersten Halteeinrichtungen 2 befinden. Es ist weiterhin eine der ersten Halteeinrichtungen 2 mit deren Innenleben dargestellt. Man erkennt hier ein Stößelelement 82, welches hier in vertikaler

Richtung, das heißt der Richtung Y bewegbar ist, in der auch die ersten Halteeinrichtungen 2 auf die Behältnisse 10 zugestellt werden. Zum Lösen der Behältnisse 10 von den ersten Halteeinrichtungen 2 kann dieses Stößelelement 82 nach unten geschoben werden und so das komprimierte Behältnis wegdrücken. Das Bezugszeichen 84 kennzeichnet eine Antriebseinrichtung, wie beispielsweise eine hydraulische und bevorzugt pneumatische Antriebseinrichtung, welche die Bewegung dieses Stößelelements 82 initiiert.

Dieses Stößelelement 82 kann jedoch auch während des Komprimierens eingesetzt werden, um die Mündung 10a des Behältnisses teilweise abzudichten, sodass nur eine definierte Menge an Luft aus dem Behältnis während der Komprimierung entweichen kann. Es wäre jedoch auch möglich, unterschiedliche Elemente einerseits zum Abstoßen der Behältnisse und andererseits zu deren Abdichtung einzusetzen.

### Bezugszeichenliste

- 1: Vorrichtung
- 2: erste Halteeinrichtungen
- 4: zweite Halteeinrichtungen
- 4a, 4b: Teile
- 5: Kunststoffvorformling
- 10: Behältnisse
- 10a: Mündungsbereiche
- 10b: Bodenbereiche
- 10c: Einrollfalte
- 10d: Mündungen
- 12: Transporteinrichtung
- 14: Träger
- 15: Transportband
- 16: Positionsbestimmungseinheit
- 17: Antriebseinrichtung
- 19: Antriebsspindel
- 22: Vorsprung
- 23: Zentrierabschnitt
- 24: Heizeinrichtung
- 25: Übergangsbereich
- 26: Druckbeaufschlagungseinrichtung
- 28: Positionsabfrageeinrichtungen
- 30: Inspektionseinrichtung
- 34: Umformungseinrichtung
- 36: Palettiereinrichtung
- 42: Verschluss, Kappe
- 50: Palette
- 82: Stößelelement
- 84: Antriebseinrichtung
- Y: Zustellrichtung
- X: Transportrichtung
- T: Transportpfad
- Z: Richtung
- R: Radius
- r: Radius

## Patentansprüche

1. Vorrichtung (1) zum Komprimieren von Kunststoffbehältnissen (10) mit einer ersten Halteeinrichtung (2), welche geeignet ist, einen ersten Bereich (10a) eines zu entleerenden Behältnisses (10) zu halten, mit einer zweiten Halteeinrichtung (4), welche geeignet ist, einen zweiten Bereich (10b) des zu entleerenden Behältnisses (10) zu halten und/oder zu stützen, wobei der zweite Bereich (10b) von dem ersten Bereich (10a) beabstandet ist mit einer Bewegungseinrichtung (17, 19), welche geeignet ist, die erste Halteeinrichtung (2) auf die zweite Halteeinrichtung (4) zu zu bewegen, um das zwischen der ersten Halteeinrichtung (2) und der zweiten Halteeinrichtung (4) befindliche Behältnis (10) zu komprimieren, wobei die erste Halteeinrichtung (2) einen Querschnitt aufweist, der geringer ist als ein Querschnitt des zu komprimierenden Behältnisses, so dass die erste Halteeinrichtung mit dem von der ersten Halteeinrichtung (2) gehaltenen ersten Bereich (10a) des Behältnisses in einen weiteren Abschnitt des Behältnisses (10) unter Bildung einer bezüglich einer Längsrichtung (Y) des Behältnisses (10) umlaufenden Faltstelle (10c) einführbar ist, wobei an der ersten Halteeinrichtung (2) ein Anschlagelement (22) vorgesehen ist, welches die Faltstelle (10c) in einer vorgegebenen Relativposition der ersten Halteeinrichtung (2) bezüglich der zweiten Halteeinrichtung (4) kontaktiert und die Vorrichtung (1) eine Druckerzeugungseinrichtung (26) aufweist, welche einen Innenraum des zu komprimierenden Behältnisses wenigstens zeitweise während dessen Komprimierung mit einem Innendruck beaufschlagt, der über dem um das Behältnis (10) bestehenden Außendruck liegt, wobei eine Außenkontur der ersten Halteeinrichtung (2) an eine sich bei der Komprimierung des Behältnisses (10) ergebende Kontur des Behältnisses (10) angepasst ist, um die Entstehung von Knicken und Brüchen zu vermeiden, **dadurch gekennzeichnet, dass** die erste Halteeinrichtung eine Temperiereinrichtung (24) zum Temperieren wenigstens eines Abschnitts der ersten Halteeinrichtung (2) aufweist.

2. Vorrichtung (1) nach Anspruch 1,
**dadurch gekennzeichnet, dass**
das Anschlagelement (22) umlaufend bezüglich der Längsrichtung der Halteeinrichtung. ausgebildet ist.

3. Vorrichtung (1) nach wenigstens einem der vorangegangenen Ansprüche,
**dadurch gekennzeichnet, dass**
die erste Halteeinrichtung (2) einen Übergangsabschnitt (25) aufweist, in dem sich ein Querschnitt der ersten Halteeinrichtung kontinuierlich erweitert.

4. Vorrichtung (1) nach wenigstens einem der vorangegangenen Ansprüche,
**dadurch gekennzeichnet, dass**
das Anschlagelement (22) über einen Übergangsabschnitt (25) an der ersten Halteeinrichtung angeordnet ist und dieser Übergangsabschnitt ein gekrümmter Abschnitt (25) ist.

5. Vorrichtung (1) nach Anspruch 1,
**dadurch gekennzeichnet, dass**
die Temperiereinrichtung (24) zum Temperieren wenigstens eines Abschnitts des Anschlagelements (22) dient.

6. Vorrichtung (1) nach wenigstens einem der vorangegangenen Ansprüche,
**dadurch gekennzeichnet, dass**
die Vorrichtung (1) ein Verschließelement aufweist, welches eine Mündung des zu komprimierten Behältnisses wenigstens teilweise verschließt um so einen kontrollierten Austritt von Luft aus dem Behältnis (10) während dessen Komprimierung zu ermöglichen.

7. Vorrichtung (1) nach Anspruch 6,
**dadurch gekennzeichnet, dass**
in dem Verschließelement ein Ventilelement oder ein Drosselelement angeordnet ist.

8. Vorrichtung (1) nach wenigstens einem der vorangegangenen Ansprüche,
**dadurch gekennzeichnet, dass**
die Vorrichtung weiterhin eine Abstreifeinrichtung aufweist, um ein komprimiertes Behältnis von der ersten Halteeinrichtung abzustreifen.

9. Vorrichtung (1) nach wenigstens einem der vorangegangenen Ansprüche,
**dadurch gekennzeichnet, dass**
die Vorrichtung (1) einen Träger (14) aufweist, an dem mehrere erste Halteeinrichtungen (2) angeordnet sind.

10. Vorrichtung (1) nach wenigstens einem der vorangegangenen Ansprüche,
**dadurch gekennzeichnet, dass**
die Vorrichtung eine Transporteinrichtung (12) aufweist, welche den ersten Halteeinrichtungen (2) die Kunststoffbehältnisse (10) zuführt.

11. Verfahren zum Komprimieren von Behältnissen (10) mit den Schritten:
- Bereitstellen von Kunststoffbehältnissen (10);
- Komprimieren dieser Kunststoffbehältnisse (10), wobei eine erste Halteeinrichtung (2) einen ersten Bereich (10a) eines zu komprimierenden Behältnisses (10) hält, und eine zweite Halteeinrichtung (4) einen zweiten Bereich (10b) des zu komprimierenden Behältnisses (10) hält, wobei der zweite Bereich (10b) von dem ersten Bereich (10a) beabstandet ist und eine Bewegungseinrichtung (17, 19) die erste Halteeinrichtung (2) auf die zweite Halteeinrichtung (4) in einer Zustellrichtung (Y) zu bewegt, um das zwischen der ersten Halteeinrichtung (2) und der zweiten Halteeinrichtung (4) befindliche Behältnis (10) zu komprimieren, wobei die erste Halteeinrichtung mit dem von der ersten Halteeinrichtung (2) gehaltenen ersten Bereich (10a) des Behältnisses in einen weiteren Abschnitt des Behältnisses unter Bildung einer bezüglich einer Längsrichtung des Behältnisses (10) umlaufenden Faltstelle (10c) eingeführt wird wobei wenigstens zeitweise während des Komprimierens mit einem an der ersten Halteeinrichtung (2) vorgesehenen Anschlagelement (22) die Faltstelle (10c) in einer vorgegebenen Relativposition der ersten Halteeinrichtung (2) bezüglich der zweiten Halteeinrichtung (4) kontaktiert wird und eine Druckerzeugungseinrichtung einen Innenraum des zu komprimierenden Behältnisses wenigstens zeitweise während dessen Komprimierung mit einem Innendruck beaufschlagt, der über dem um das Behältnis bestehenden Außendruck liegt, wobei eine Außenkontur der ersten Halteeinrichtung (2) an eine sich bei der Komprimierung des Behältnisses (10) ergebende Kontur des Behältnisses (10) angepasst ist, um die Entstehung von Knicken und Brüchen zu vermeiden, **dadurch gekennzeichnet, dass** die erste Halteeinrichtung (2) eine Temperiereinrichtung (24) zum Temperieren wenigstens eines Abschnitts der ersten Halteeinrichtung (2) aufweist.

12. Verfahren nach Anspruch 11,
**dadurch gekennzeichnet, dass**
das Behältnis mit einem vorgegebenen, über dem Umgebungsdruck liegenden Druck vor dem Komprimieren vorgespannt wird.

## Claims

1. Apparatus (1) for compressing plastics material containers (10), having a first holding device (2) which is suitable for holding a first region (10a) of a container (10) to be emptied, having a second holding device (4) which is suitable for holding and/or supporting a second region (10b) of the container (10) to be emptied, wherein the second region (10b) is at a distance from the first region (10a), having a movement device (17, 19) which is suitable for moving the first holding device (2) towards the second holding device (4) in order to compress the container (10) located between the first holding device (2) and the second holding device (4), wherein the first holding device (2) has a cross-section which is preferably smaller than a cross-section of the container to be compressed, so that the first holding device with the first region (10a) of the container that is held by the first holding device (2) can be introduced into a further section of the container (10), thereby forming a fold (10c) running circumferentially relative to a longitudinal direction (Y) of the container (10),
wherein
there is provided on the first holding device (2) a stop element (22) which makes contact with the fold (10c) in a predefined relative position of the first holding device (2) relative to the second holding device (4) and the apparatus (1) has a pressure generating device (26) which applies to an interior of the container to be compressed, at least at times during the compression of the latter, an internal pressure which is greater than the external pressure prevailing around the container (10), wherein an outer contour of the first holding device (2) is adapted to a contour of the container (10) resulting from the compression of the container (10) to avoid the formation of kinks and fractures, **characterized in that**
the first holding device (2) has a tempering device (24) for tempering at least one section of the first holding device (2).

2. Apparatus (1) according to claim 1,
**characterized in that**
the stop element (12) is formed circumferentially relative to the longitudinal direction (L) of the holding device.

3. Apparatus (1) according to at least one of the preceding claims,
**characterized in that**
the first holding device (2) has a transition section (25) in which a cross-section of the first holding device widens in a continuous manner.

4. Apparatus (1) according to at least one of the preceding claims,
**characterized in that**
the stop element (22) is arranged above a transition section (25) on the first holding device and said transition section is a curved section (25).

5. Apparatus (1) according to claim 1,
**characterized in that**
the tempering device (24) serves for tempering at least one section of the stop element (22).

6. Apparatus (1) according to at least one of the preceding claims,
**characterized in that**
the apparatus (1) has a closure element which at least partially closes a mouth of the container to be compressed, in order thus to enable a controlled escape of air from the container (10) during the compression of the latter.

7. Apparatus (1) according to claim 6,
**characterized in that**
a valve element or a throttle element is arranged in the closure element.

8. Apparatus (1) according to at least one of the preceding claims,
**characterized in that**
the apparatus also has a stripping device for stripping a compressed container from the first holding device.

9. Apparatus (1) according to at least one of the preceding claims,
**characterized in that**
the apparatus (1) has a carrier (14) on which several first holding devices (2) are arranged.

10. Apparatus (1) according to at least one of the preceding claims,
**characterized in that**
the apparatus has a transport device (12) which feeds the plastics material containers (10) to the first holding devices (2).

11. Method for compressing containers (10), comprising the steps:
- providing plastics material containers (10);
- compressing these plastics material containers (10), wherein a first holding device (2) holds a first region (10a) of a container (10) to be compressed, and a second holding device (4) holds a second region (10b) of the container (10) to be compressed, wherein the second region (10b) is at a distance from the first region (10a), and a movement device (17, 19) moves the first holding device (2) towards the second holding device (4) in an infeed direction (Y) in order to compress the container (10) located between the first holding device (2) and the second holding device (4), wherein the first holding device with the first region (10a) of the container that is held by the first holding device (2) is introduced into a further section of the container, thereby forming a fold (10c) running circumferentially relative to a longitudinal direction of the container (10),
wherein
at least at times during the compression, the fold (10c) in a predefined relative position of the first holding device (2) relative to the second holding device (4) makes contact with a stop element (22) provided on the first holding device (2) and a pressure generating device applies to an interior of the container to be compressed, at least at times during the compression of the latter, an internal pressure which is greater than the external pressure prevailing around the container, wherein an outer contour of the first holding device (2) is adapted to a contour of the container (10) resulting from the compression of the container (10) to avoid the formation of kinks and fractures,
**characterized in that**
the first holding device (2) has a tempering device (24) for tempering at least one section of the first holding device (2).

12. Method according to claim 11,
**characterized in that**
the container, prior to being compressed, is preloaded with a predefined pressure which is greater than the ambient pressure.

## Revendications

1. Appareil (1) destiné à comprimer des contenants en matière plastique (10), comprenant un premier dispositif de support (2), lequel est adapté à porter une première zone (10a) d'un contenant (10) à vider, d'un deuxième dispositif de support (4), lequel est adapté à porter et/ou à soutenir une deuxième zone (10b) du contenant (10) à vider, dans lequel la deuxième zone (10b) est espacée de la première zone (10a) avec un moyen de déplacement (17, 19), lequel est adapté à déplacer le premier dispositif de support (2) en direction du deuxième dispositif de support (4), afin de comprimer le contenant (10) situé entre le premier dispositif de support (2) et le deuxième dispositif de support (4), dans lequel le premier dispositif de support (2) présente une section transversale de préférence plus petite qu'une section transversale du contenant à comprimer, de sorte que le premier dispositif de support présentant la première zone (10a) du contenant portée par le premier dispositif de support (2) peut être introduit dans une autre partie du contenant (10) avec formation d'un point de pliage (10c) périphérique par rapport à une direction longitudinale (Y) du contenant (10),
dans lequel
un élément de butée (22) est situé sur le premier dispositif de support (2) et est en contact avec le point de pliage (10c) dans une position relative prédéfinie du premier dispositif de support (2) par rapport au deuxième dispositif de support (4) et l'appareil (1) comprend un dispositif de génération de pression (26), lequel expose un espace intérieur du contenant à comprimer, au moins temporairement pendant la compression de ce dernier, à une pression intérieure supérieure à la pression extérieure régnant autour du contenant (10), dans lequel un contour extérieur du premier dispositif de support (2) est adapté à un contour du contenant (10) résultant de la compression du contenant (10), afin d'éviter la formation de coudes et de pliures,
**caractérisé en ce que**
le premier dispositif de support présente un dispositif de thermorégulation (24) destiné à thermo-réguler au moins une partie du premier dispositif de support (2).

2. Appareil (1) selon la revendication 1,
**caractérisé en ce que**
l'élément de butée (22) est formé de manière périphérique par rapport à la direction longitudinale du dispositif de support.

3. Appareil (1) selon au moins l'une des revendications précédentes,
**caractérisé en ce que**
le premier dispositif de support (2) présente une partie de transition (25) dans laquelle une section transversale du premier dispositif de support s'élargit en continu.

4. Appareil (1) selon au moins l'une des revendications précédentes,
**caractérisé en ce que**
l'élément de butée (22) est agencé sur le premier dispositif de support par l'intermédiaire d'une partie de transition (25) et cette partie de transition est une partie (25) courbée.

5. Appareil (1) selon la revendication 1,
**caractérisé en ce que**
le dispositif de thermorégulation (24) sert à thermo-réguler au moins une partie de l'élément de butée (22).

6. Appareil (1) selon au moins l'une des revendications précédentes,
**caractérisé en ce que**
l'appareil (1) comprend un élément de fermeture, lequel ferme au moins en partie une embouchure du contenant à comprimer afin de permettre une sortie contrôlée d'air du contenant (10) pendant la compression dudit contenant.

7. Appareil (1) selon la revendication 6,
**caractérisé en ce que**
un élément soupape ou un élément d'étranglement est agencé dans l'élément de fermeture.

8. Appareil (1) selon au moins l'une des revendications précédentes,
**caractérisé en ce que**
l'appareil présente en outre un dispositif d'extraction pour extraire un contenant comprimé du premier dispositif de support.

9. Appareil (1) selon au moins l'une des revendications précédentes,
**caractérisé en ce que**
l'appareil (1) présente un support (14) sur lequel plusieurs premiers dispositifs de support (2) sont agencés.

10. Appareil (1) selon au moins l'une des revendications précédentes,
**caractérisé en ce que**
l'appareil comprend un dispositif de transport (12), lequel amène les contenants en matière plastique (10) aux premiers dispositifs de support (2).

11. Procédé permettant de comprimer des contenants (10), comprenant les étapes :
- de fourniture de contenants en matière plastique (10) ;
- de compression de ces contenants en matière plastique (10), dans lequel un premier dispositif de support (2) porte une première zone (10a) d'un contenant (10) à comprimer, et un deuxième dispositif de support (4) porte une deuxième zone (10b) du contenant (10) à comprimer, dans lequel la deuxième zone (10b) est espacée de la première zone (10a), et un moyen de déplacement (17, 19) déplace le premier dispositif de support (2) en direction du deuxième dispositif de support (4) dans une direction d'avancement (Y), afin de comprimer le contenant (10) situé entre le premier dispositif de support (2) et le deuxième dispositif de support (4), dans lequel le premier dispositif de support présentant la première zone (10a) du contenant portée par le premier dispositif de support (2) est introduit dans une autre partie du contenant (10) avec formation d'un point de pliage (10c) périphérique par rapport à une direction longitudinale du contenant (10),
dans lequel
le point de pliage (10c) est en contact avec un élément de butée (22) situé sur le premier dispositif de support (2) dans une position relative prédéfinie du premier dispositif de support (2) par rapport au deuxième dispositif de support (4) au moins temporairement pendant la compression et un dispositif de génération de pression expose un espace intérieur du contenant à comprimer, au moins temporairement pendant la compression de ce dernier, à une pression intérieure supérieure à la pression extérieure régnant autour du contenant, dans lequel un contour extérieur du premier dispositif de support (2) est adapté à un contour du contenant (10) résultant de la compression du contenant (10), afin d'éviter la formation de coudes et de pliures,
**caractérisé en ce que**
le premier dispositif de support (2) présente un dispositif de thermorégulation (24) destiné à thermo-réguler au moins une partie du premier dispositif de support (2).

12. Procédé selon la revendication 11,
**caractérisé en ce que**
le contenant est précontraint à une pression prédéfinie supérieure à la pression ambiante avant d'être comprimé.
